# FASCICULE DE BREVET EUROPEEN

(11) **EP 2 454 928 B1**
(45) Date de publication et mention de la délivrance du brevet: **16.10.2013**
(21) Numéro de dépôt: 11189792.2
(22) Date de dépôt: 18.11.2011
(51) Int. Cl.: A01C 17/00

(54) **Dispositif d'épandage à goulotte permettant de prendre en compte l'effet débit**
Streuwerk mit Rutsche, das ermöglicht, den Durchsatzeffekt zu berücksichtigen
Spreader device with chute suitable for taking into account the flow effect

(30) Priorité: 18.11.2010 FR 1059490
(43) Date de publication de la demande: 23.05.2012
(73) Titulaire: Sulky Burel, 35220 Chateaubourg (FR)
(72) Inventeur: Clochard, Daniel, 35113 Domagne (FR); Leveille, Lionel, 35220 Saint-Didier (FR)
(74) Mandataire: Bioret, Ludovic

(56) Documents cités:
- EP-A1- 0 170 605
- EP-A1- 1 504 645
- EP-A1- 2 198 683
- DE-A1- 1 557 916
- DE-A1- 2 210 207
- GB-A- 713 267
- US-A- 3 232 626

## Description

Le domaine de l'invention est celui de l'épandage de particules, dans le domaine de l'agriculture, ou de produits se présentant sous la forme de grains, tels que des engrais. Plus précisément, l'invention concerne les épandeurs centrifuges.

Ces épandeurs centrifuges sont connus, depuis longtemps. Ils mettent en oeuvre un ou plusieurs disques mobiles en rotation, et équipés de pales. Le produit à épandre peut notamment être stocké dans une trémie, et amené ou déversé au-dessus de chaque disque par une goulotte, de façon à être projeté par l'intermédiaire des pales sur le terrain sur lequel il doit être déposé. Un exemple de cette approche est décrite dans le document de brevet EP 0 170 665.

Selon les besoins, la quantité de particules délivrées sur un disque par unité de temps peut varier, par exemple d'une proportion de 1 à 20. Dans le cadre de l'agriculture de précision, ces variations peuvent être permanentes, ou quasi permanentes. En effet, le système d'épandage connaît sa position précise, par exemple à l'aide d'un positionnement par GPS. Il connaît par ailleurs le besoin en engrais de la zone correspondante, par exemple à partir de cartes élaborées précédemment. En conséquence, en cours d'épandage, sans que l'épandage soit interrompu et sans intervention de l'agriculteur, le système peut décider de modifier la dose de particules délivrées. Selon une autre approche, l'agriculteur peut lui-même contrôler manuellement cette dose, à l'aide de moyens de réglage prévu à cet effet dans la cabine de son tracteur.

Le débit instantané est également fonction, bien sûr, de la vitesse du tracteur. Par exemple, si celui-ci ralentit, le débit (qui s'exprime par exemple en kg/min) devra être diminué en proportion, pour conserver constante la dose épandue.

On a constaté que la zone, ou nappe, couverte par une dose de particules délivrées sur un disque présente une forme sensiblement en croissant (comme précisé notamment dans le document de brevet EP 1 695 605).

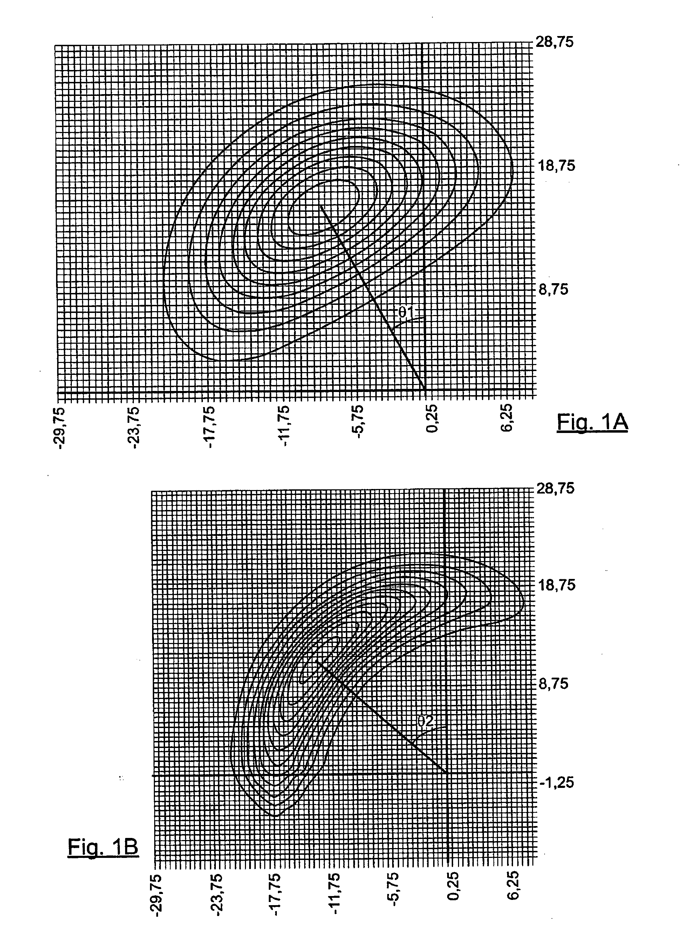

Une des difficultés connues de l'épandage est le problème de « l'effet débit» (parfois appelé également, par abus de langage, « effet dose »). En effet, on constate que, en fonction de la quantité de particules délivrées, le croissant résultant varie fortement, en surface et en direction, comme illustré par les figures 1A et 1B.

Plus précisément, on constate que, plus la dose délivrée est importante, plus le croissant formé par la nappe d'épandage s'étend angulairement, tout en se décalant angulairement, par rapport à l'axe de déplacement du tracteur.

Ainsi, à titre d'exemple, dans le cas d'un distributeur tel que décrit dans le document de brevet EP 0170605, la figure 1A présente la nappe obtenue, avec un dispositif de référence, pour un débit de 32 kg/min. Dans ce cas, l'angle θ1 vaut environ 30°, et l'écart-type angulaire σθ1 vaut environ 23°. En revanche, si le débit vaut 190 kg/min (figure 1B), l'angle θ2 vaut environ 50°, et l'écart-type angulaire σθ1 vaut environ 33°.

Il est donc peu aisé de contrôler précisément l'épandage, du fait de ces variations fortes de la forme de la nappe.

Pour tenter de résoudre ce problème, l'homme du métier a imaginé diverses solutions visant à maintenir la forme et la position de la nappe les plus constantes possible, et qui suppose de faire varier la position et/ou la surface d'un ou plusieurs éléments de délivrance des particules.

Notamment, il est proposé de déplacer la goulotte délivrant les particules, en fonction du débit, pour déplacer angulairement, par rapport au disque d'épandage (dans le sens de rotation de celui-ci ou dans le sens inverse), le point d'alimentation moyen des particules.

Un inconvénient de cette technique est qu'elle nécessite un asservissement de la position de la goulotte, de façon que ce point d'alimentation soit déplacé angulairement, par rapport au disque d'épandage, en fonction des besoins.

Cet asservissement rajoute, bien sûr, une complexité au dispositif. Il est nécessaire de prévoir des moyens mobiles, et des moyens d'actionnement, tels que des vérins pneumatiques ou électriques. De plus, il faut piloter ces vérins, et donc obtenir une information représentative du débit délivré en permanence.

Par ailleurs, cet asservissement introduit des risques supplémentaires vis-à-vis de la fiabilité, ou peut à tout le moins se dérégler.

L'invention a notamment pour objectif de pallier ces inconvénients de l'art antérieur.

Plus précisément, l'invention a pour objectif de fournir une technique d'épandage centrifuge, prenant en compte l'effet débit de façon simple et efficace.

En particulier, un objectif de l'invention est de fournir une telle technique permettant de s'affranchir d'un asservissement ou de tout autre système de réglage complexe.

Un autre objectif de l'invention est de fournir une telle technique qui soit peu coûteuse à mettre en oeuvre et qui ne nécessite pas d'entretien particulier.

Selon un mode de réalisation particulier, un objectif de l'invention est de fournir une telle technique, qui puisse être adaptée aisément à des systèmes existants.

Ces objectifs, ainsi que d'autres qui apparaîtront par la suite, sont atteints à l'aide d'un dispositif d'épandage de particules stockées dans au moins une trémie présentant au moins une ouverture de sortie délivrant des particules dans au moins une goulotte dont l'extrémité de sortie est placée au-dessus d'un disque d'épandage recevant et projetant lesdites particules.

Selon l'invention, les parois de ladite goulotte sont formées de façon que la section de ladite extrémité de sortie provoque un déplacement du barycentre de la section du flux de particules au niveau de ladite extrémité de sortie, dans un sens opposé à celui de la rotation dudit disque d'épandage, lorsque la quantité de particules présente dans ladite goulotte augmente.

Ainsi, les parois de ladite goulotte sont formées de façon que la section de ladite extrémité de sortie assure un déplacement transversal du barycentre, ou centroïde, de la section du flux de particules au niveau de ladite extrémité de sortie, en fonction de la quantité de particules présente dans ladite goulotte. Ce déplacement transversal se traduit, au niveau du disque, par un déplacement angulaire, comme expliqué ci-après.

On entend ici, par barycentre ou centroïde, le point fictif situé à l'intérieur du polygone défini par la section du flux de produit, au niveau de la sortie de la goulotte, dont les coordonnées correspondent au centre de ce polygone.

Ce barycentre se déplace selon un axe reliant les bords, ou parois latérales, de la goulotte, dans le plan de la section de l'extrémité de sortie. Les particules délivrées par la goulotte tombent en chute libre sur un disque entraîné en rotation. Le point de d'alimentation moyen sur le disque (parfois également appelé point de chute moyen, et qui correspond sensiblement à la projection du barycentre selon un axe vertical) est donc décalé angulairement, lorsque le barycentre se décale transversalement au niveau de la sortie de la goulotte.

Plus précisément, le point d'alimentation moyen se déplace angulairement, par rapport au disque, dans le sens opposé au sens de rotation, lorsque la quantité de particules augmente dans la goulotte. Si cette quantité est importante, les particules sont donc délivrées plus tôt, par rapport au disque. Inversement, si la quantité de particules dans la goulotte est faible, celles-ci sont en moyenne délivrées plus tard.

Ainsi, le déplacement angulaire du point d'alimentation moyen est contrôlé par la forme spécifique de la goulotte, dont la sortie est adaptée pour modifier la position de ce point d'alimentation moyen en fonction du débit, sans qu'il soit nécessaire de déplacer la goulotte.

Cette dernière est donc fixe, pendant l'épandage, malgré la variation possible de débit, c'est-à-dire de la quantité délivrée à chaque instant. Bien sûr, la goulotte peut cependant être mobile, et réglable, par exemple en fonction du type de produit à épandre. Ce réglage s'effectue avant l'épandage proprement dit.

En d'autres termes, en contrôlant, la forme de la goulotte, et en particulier la section de cette goulotte, définie par ses parois, au niveau de sa sortie (ou extrémité de sortie), on contrôle la section du flux de produit, qui correspond à une partie de la section de la goulotte (base et parois latérales jusqu'à la hauteur du produit). Lorsque la hauteur du produit varie, en fonction de la dose, la section du flux, contrainte par les parois latérales, varie, et son centroïde, ou barycentre se déplace.

Le point d'alimentation moyen étant sensiblement aligné, selon un axe vertical, avec le barycentre de la section du flux de produit, au niveau de la sortie de la goulotte, le déplacement du barycentre entraîne le déplacement du point d'alimentation moyen, qui est angulairement décalé sur le disque, ou en d'autres termes retardé ou avancé, par rapport au sens de rotation du disque, en fonction du débit, sans modification de la position de la goulotte.

Selon un mode de réalisation particulier, ladite extrémité de sortie de ladite goulotte présente donc une forme asymétrique, les deux parois latérales étant non symétriques par rapport à un plan perpendiculaire à ladite paroi de fond.

Cette structure permet, de façon efficace et simple, d'optimiser et de maintenir sensiblement constante la forme et les dimensions de la nappe.

Notamment, une première paroi latérale peut former un premier angle inférieur à 90° (angle aigu) avec ladite paroi de fond, et une seconde paroi latérale un second angle supérieur à 90° (angle obtus) avec ladite paroi de fond.

Selon des modes de réalisation particuliers, ledit premier angle est ainsi compris entre 50 et 75°, et ledit second angle est compris entre 110 et 130°.

Préférentiellement, ladite première paroi latérale est la paroi rencontrée le plus tard, selon le sens de rotation du disque d'épandage.

Selon une autre caractéristique particulière, ladite goulotte peut présenter au moins une découpe longitudinale, à partir de ladite extrémité de sortie et sur une longueur prédéfinie, permettant le passage d'une portion desdites particules avant d'avoir atteint ladite extrémité de sortie.

Cette découpe permet, dans le cas d'un très faible débit, d'avancer ou de retarder angulairement le point d'alimentation.

Le fond de la goulotte peut être plan. Selon d'autres modes de réalisation, le fond de ladite goulotte peut présenter une forme non plane et/ou non symétrique.

D'autres caractéristiques et avantages de l'invention apparaîtront à la lecture de la description suivante d'un mode de réalisation préférentiel, donné à titre de simple exemple illustratif et non-limitatif et des dessins annexés, parmi lesquels :
- les figures 1A et 1B déjà commentées en préambule, illustrent le problème de l'effet débit ;
- les figures 2A et 2B sont des vues schématiques de la section de sortie d'une goulotte selon un mode de réalisation de l'invention, respectivement avec une dose de particules faible et avec une dose de particules importante, et du point d'alimentation correspondant, sur le disque d'épandage ;
- les figures 3A à 3C sont trois vues en perspective, selon des angles différents, d'un exemple de réalisation d'une goulotte selon l'invention ;
- les figures 4A et 4B illustrent, schématiquement, deux exemples de variantes de réalisation d'une goulotte selon l'invention ;
- la figure 5 est une représentation schématique du décalage angulaire obtenu selon le principe de l'invention.

L'invention s'applique donc aux dispositifs, ou machines, d'épandage, assurant l'épandage de particules contenues dans une trémie, à l'aide d'au moins un (classiquement deux) disque d'épandage, muni de pales projetant des particules à épandre. Les quantités, et donc les débits, de produit à épandre sont délivrées depuis la trémie, par l'intermédiaire de goulottes (classiquement une goulotte pour chaque disque) qui laissent tomber en chute libre sur le disque le flux de particules.

Comme indiqué précédemment, l'invention concerne donc une goulotte particulière, et plus généralement une machine d'épandage, équipée d'une telle goulotte particulière, conçue de façon qu'il n'est pas nécessaire de la déplacer par rapport au disque pour contrôler les variations de formes et/ou de dimensions de la nappe épandue lorsque le débit varie. En d'autres termes, la section de sortie de la goulotte est adaptée pour assurer les modifications nécessaires sur le point d'alimentation, en le décalant angulairement en fonction du débit (par rapport au sens de rotation du disque d'épandage, le point d'alimentation est donc angulairement « avancé » ou « retardé »).

En effet, le décalage du point d'alimentation est assuré par la forme spécifique de la goulotte, au niveau de sa sortie, ou extrémité de sortie, qui est configurée de façon que le point d'alimentation moyen se décale, par rapport au disque. Pour ceci, la section du volume défini par le flux de particules au niveau de cette extrémité de sortie présente un barycentre, entre les parois latérales de la goulotte, en fonction du débit (et donc de l'épaisseur, ou hauteur, définie par le produit au niveau de cette sortie), de façon que le point d'alimentation moyen se déplace également, angulairement, par rapport au disque.

L'invention propose donc une nouvelle approche du contrôle de l'effet débit, ne nécessitant aucun réglage de la position de la goulotte lorsque le débit délivré, à un instant donné, varie, même de façon importante. Pour cela, l'invention met en oeuvre une goulotte asymétrique, permettant de faire varier le point d'alimentation, en fonction du débit délivré.

Il est à noter qu'un réglage préalable de la goulotte peut être prévu, avant le début de l'épandage, par exemple pour prendre en compte les caractéristiques spécifiques du produit à épandre. En revanche, aucun réglage n'est nécessaire, pour contrôler l'effet débit pour ce produit, en cours d'épandage.

L'aspect asymétrique de cette goulotte est considéré (au moins) sur la portion de sortie de celle-ci, c'est-à-dire sur la section de la goulotte, définie par ses parois. Plus précisément, on considérera la section du flux de produit au niveau de cette sortie.

Au niveau de cette section, la forme de la goulotte est définie de façon que le barycentre de la surface définie par le flux de particules à épandre se déplace transversalement (c'est-à-dire entre les parois latérales de la goulotte), en fonction du débit.

Ainsi, le point d'alimentation moyen, sur le disque d'épandage, se déplace angulairement, par rapport au centre de ce disque. Plus précisément, le point moyen d'alimentation (projection verticale du barycentre sur le disque) est retardé, angulairement, si la quantité de particules est faible, et avancé si la quantité de particules est importante.

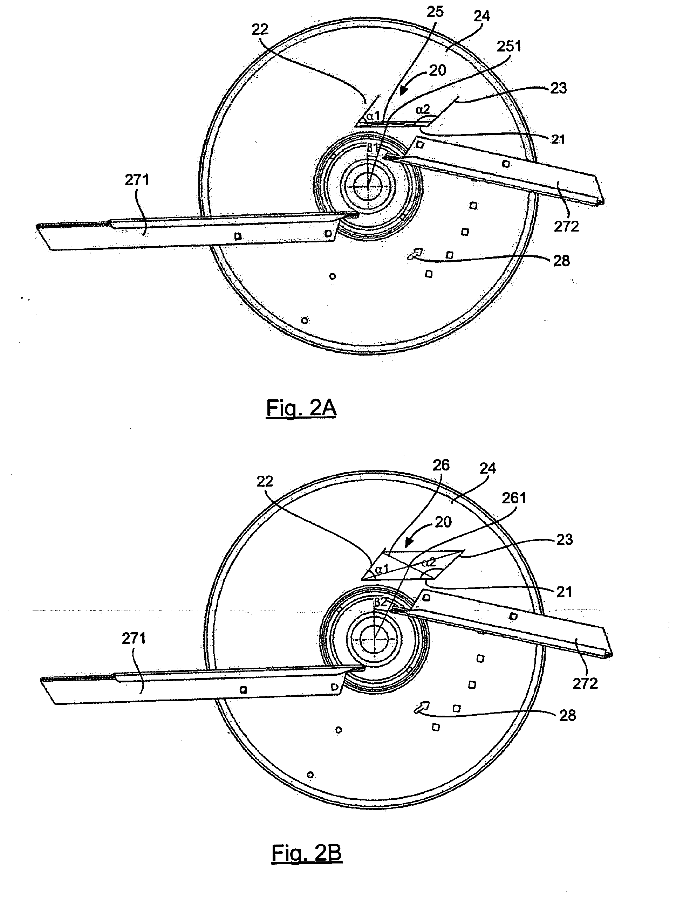

Ce principe est illustré par les figures 2A et 2B, illustrant un mode de réalisation particulier.

Plus précisément, comme on le voit sur ces figures, la section de la goulotte 20, au niveau de sa sortie définit schématiquement un trapèze, avec un fond, ou une base, sensiblement horizontale 21 et deux côtés 22 et 23, inclinés par rapport au fond 21, dans le sens opposé à la rotation du disque 24, muni de pales d'éjection 271, 272.

Dans les goulottes classiques, les parois ou côtés 22 et 23 sont symétriques, par rapport à un plan de symétrie perpendiculaire au fond 21. Elles forment donc avec ce fond un même angle obtus. En revanche, selon un mode de réalisation de l'invention, ces parois 22 et 23 sont asymétriques, par rapport à ce plan, et les angles formés avec le fond sont différents.

Ainsi, selon ce mode de réalisation de l'invention, ladite goulotte présente une paroi de fond et deux parois latérales, une première paroi latérale forme un premier angle inférieur à 90° avec ladite paroi de fond, et en ce qu'une seconde paroi latérale forme un second angle supérieur à 90° avec ladite paroi de fond.

Plus précisément encore, selon ce mode de réalisation, le côté 22, le plus tard angulairement du disque 24 (c'est-à-dire rencontré le plus tard, considérant le sens de rotation du disque), forme avec la base 21 un angle α1 aigu (inférieur à 90°) alors que l'angle α2 formé par l'autre côté 23 et la base 21 est un angle obtus (supérieur à 90°). Cette forme particulière et inventive permet d'obtenir une bonne efficacité.

Dans ce mode de réalisation particulier, α1 vaut de l'ordre de 50 à 75° et α2 de l'ordre de 110 à 130°.

Sur la figure 2A, on a représenté schématiquement une première dose de particules 25, relativement faible, dont le barycentre 251 définit un premier point d'alimentation sur le disque.

Sur la figure 2B, on a représenté schématiquement une dose de produit 26, plus importante. On constate alors que, du fait de la forme particulière de la goulotte, le barycentre 261 s'est déplacé par rapport au disque, plus tôt angulairement. En conséquence, le point d'alimentation se situe plus tôt, lorsque l'on considère la rotation (28) de ce disque 24. Plus précisément, le barycentre 261, au niveau de l'extrémité de sortie de la goulotte, est décalé d'une distance Δ1 (de quelques millimètres ou centimètres), et le point d'alimentation sur le disque est en conséquence décalé d'un angle Δβ (=β₂-β₁), pouvant par exemple aller jusqu'à 15°.

En d'autres termes, β₂ étant supérieur à β₁, le point d'alimentation moyen est avancé, sur la figure 2B, par rapport à la figure 2A.

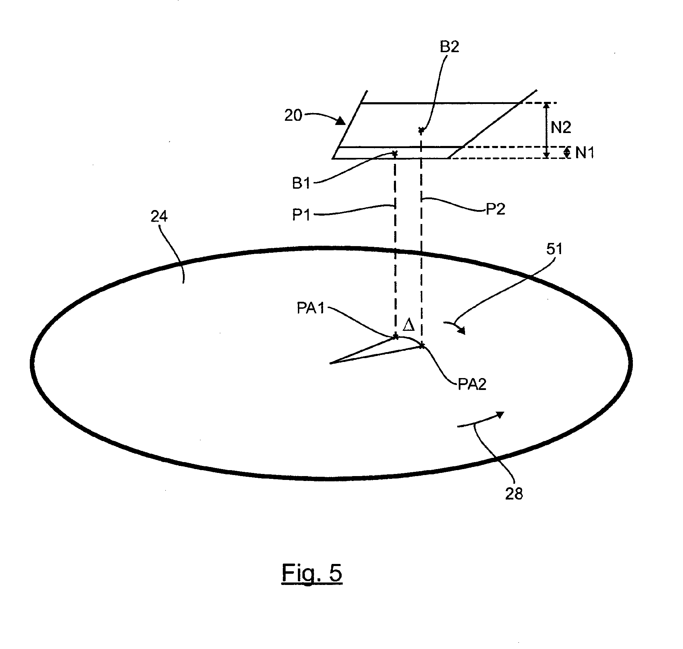

Ce principe est illustré également, sous une forme simplifiée, par la figure 5 (sur laquelle, à nouveau, les dimensions et les échelles ne sont pas systématiquement respectées, pour faciliter la lecture). Selon le débit, le niveau de particules varie dans la goulotte 20. On a illustré sur cette figure 5 deux niveaux N1 et N2, correspondant respectivement à une faible quantité de particules et à une quantité importante de particules.

Comme déjà expliqué, du fait de la section particulière de la goulotte, au moins au niveau de sa sortie, les particules définissent sensiblement, en section un parallélogramme, dont la position du barycentre B1, B2 se décale en fonction de la quantité de particules. Sur la figure 5, par simplification, seule la section de sortie de la goulotte est représentée. On constate que, lorsque la quantité de particules (donc le débit) augmente, le barycentre se déplace vers la droite (de B1 vers B2).

La goulotte 20 étant placée au-dessus du disque 24, l'effet de ce décalage de barycentre se constate sur le disque en considérant leurs projections respectives P1 et P2, selon un axe vertical. Au niveau du disque, ces projections correspondent aux points d'alimentations moyens PA1 et PA2 respectivement. Ces points d'alimentation moyens sont décalés angulairement, d'un angle Δ. Le point d'alimentation se déplace angulairement dans le sens 51 opposé au sens de rotation 28 du disque 24, lorsque la quantité de particules augmente dans la goulotte (de N1 vers N2).

Ainsi, selon l'invention, on a pu déplacer le point d'alimentation sur le disque, en fonction de la quantité de produit dans la goulotte, sans modifier la position de cette dernière. Ce décalage du point d'alimentation permet d'obtenir une surface d'épandage sensiblement constante (contrairement à l'exemple des figures 1A et 1B).

Avec une telle goulotte et sans aucun réglage particulier, on constate en effet que l'angle θ de la nappe reste sensiblement constant, par exemple dans une plage allant de 0° à 40°.

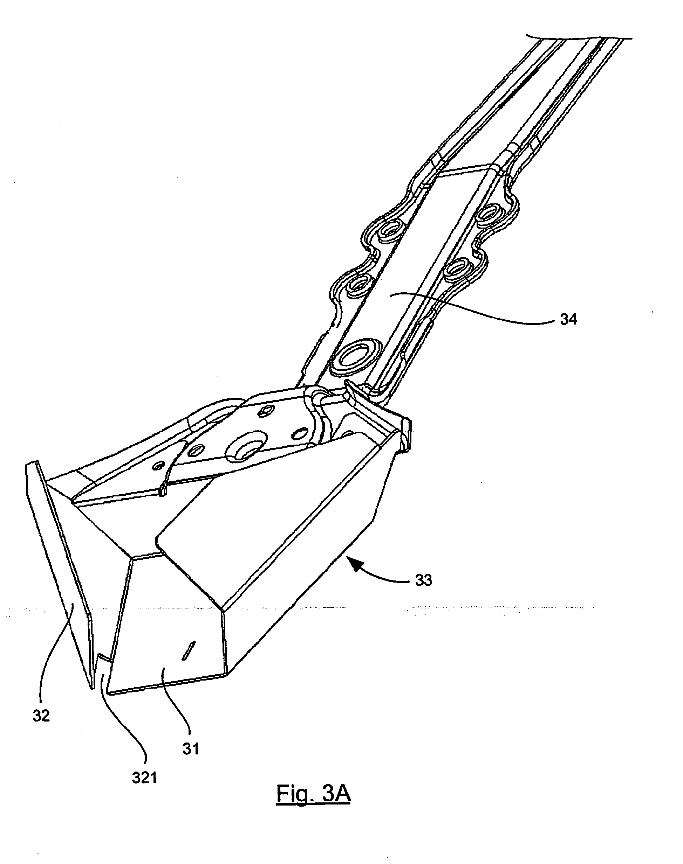

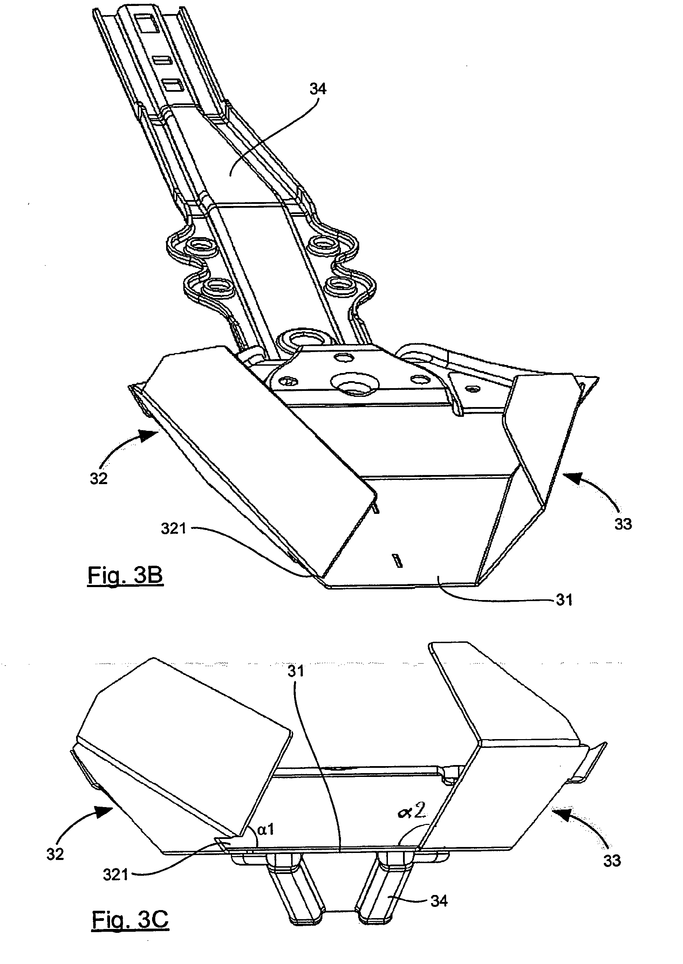

Les figures 3A à 3C sont trois vues en perspective, selon des angles différents, d'une telle goulotte, selon un mode de réalisation particulier. Selon ce mode de réalisation, les deux bords latéraux 32 et 33 sont réalisés sous la forme de deux ailes repliées, et la base 31 présente une forme trapézoïdale dont le petit côté correspond à la zone de sortie des particules. Cette goulotte est reliée à la machine d'épandage par un bras 34, qui peut être mobile et réglable. Ce réglage est cependant effectué une fois pour toutes, par exemple, en fonction du type de particules à épandre. Ensuite, après ce réglage, comme déjà précisé, la goulotte reste fixe, quelle que soit le débit délivré.

On notera que l'aile 32 présente une découpe 321, permettant encore d'optimiser la distribution des particules en fonction de la dose délivrée, en augmentant la quantité de particules délivrées tard angulairement, dans le cas de très faibles débits. En effet, dans cette situation, une portion des particules s'écoule par cette ouverture 321.

On peut noter qu'une telle découpe existe dans le document de brevet EP 0170605 (notamment figure 7). Toutefois, les formes de goulotte proposées dans ce document sont fortement différentes de celles de l'invention, et ne permettent pas de contrôler l'effet débit. Au contraire, elles sont configurées de façon que la position du centroïde de la section du flux reste constante, transversalement, et donc que le point d'alimentation moyen reste inchangé.

On comprend que la nouveauté de l'invention repose sur la forme particulière de la section de la sortie de la goulotte, présentant une paroi formant un angle aigu et une paroi formant un angle obtus, qui permet d'assurer un décalage du point d'alimentation, en fonction de la quantité de particules présente dans cette goulotte. Ainsi, au lieu de présenter classiquement une forme symétrique, la forme est déterminée pour obtenir un tel décalage, sans qu'il soit nécessaire de modifier la position de la goulotte. D'autres formes que celles décrites en relation avec les figures 3A à 3C peuvent bien sûr être envisagées, pour permettre d'obtenir le même résultat.

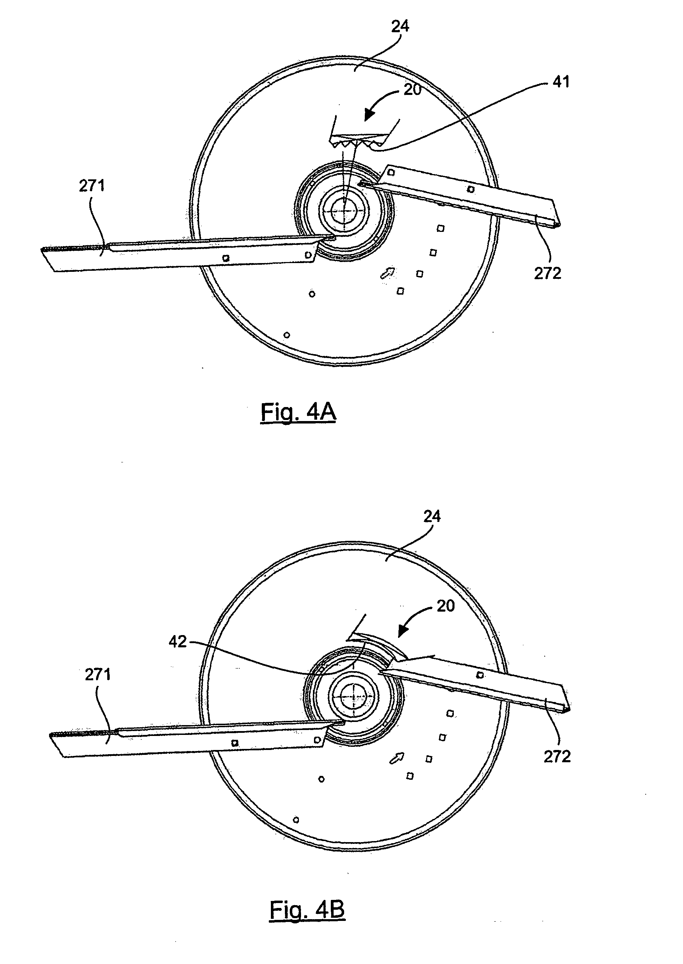

Les figures 4A et 4B montrent, à titre d'exemple et de façon schématique (non optimisée), des formes particulières permettant d'obtenir un résultat similaire. Sur la figure 4A, le fond 41 de la goulotte présente une forme en dents de scie. Sur la figure 4B, le fond 42 est incurvé, selon un arc dont l'origine est préférentiellement placée sur l'axe de rotation du disque.

## Revendications

1. Dispositif d'épandage de particules stockées dans au moins une trémie présentant au moins une ouverture de sortie délivrant des particules dans au moins une goulotte (20) dont l'extrémité de sortie est placée au-dessus d'un disque d'épandage (24) recevant et projetant lesdites particules,
**caractérisé en ce que** les parois (21, 22, 23) de ladite goulotte sont formées de façon que la section de ladite extrémité de sortie provoque un déplacement du barycentre (B1, B2) de la section du flux de particules au niveau de ladite extrémité de sortie, dans un sens opposé (51) à celui de la rotation (28) dudit disque d'épandage, lorsque la quantité de particules (N1, N2) présente dans ladite goulotte augmente.

2. Dispositif d'épandage selon la revendication 1, **caractérisé en ce que** ladite extrémité de sortie de ladite goulotte (20) présente une forme asymétrique.

3. Dispositif d'épandage selon la revendication 2, **caractérisé en ce que** ladite goulotte présente une paroi de fond (21) et deux parois latérales (22, 23) non symétriques par rapport à un plan perpendiculaire à ladite paroi de fond.

4. Dispositif d'épandage selon la revendication 3, **caractérisé en ce qu'**une première paroi latérale (22) forme un premier angle inférieur à 90° avec ladite paroi de fond (21), et **en ce qu'**une seconde paroi latérale (23) forme un second angle supérieur à 90° avec ladite paroi de fond (21).

5. Dispositif d'épandage selon la revendication 4, **caractérisé en ce que** ledit premier angle (α1) est compris entre 50 et 75°.

6. Dispositif d'épandage selon l'une quelconque des revendications 4 et 5, **caractérisé en ce que** ledit second angle (α2) est compris entre 110 et 130°.

7. Dispositif d'épandage selon l'une quelconque des revendications 4 à 6, **caractérisé en ce que** ladite première paroi latérale (22) est la paroi rencontrée le plus tard, selon le sens de rotation (28) du disque d'épandage.

8. Dispositif d'épandage selon l'une quelconque des revendications 1 à 7, **caractérisé en ce que** ladite goulotte (20) présente au moins une découpe longitudinale (321), à partir de ladite extrémité de sortie et sur une longueur prédéfinie, permettant le passage d'une portion desdites particules avant d'avoir atteint ladite extrémité de sortie.

9. Dispositif d'épandage selon l'une quelconque des revendications 1 à 8, **caractérisé en ce que** le fond (21) de ladite goulotte est sensiblement plan.

10. Dispositif d'épandage selon l'une quelconque des revendications 1 à 8, **caractérisé en ce que** le fond (41, 42) de ladite goulotte présente une forme non plane et/ou non symétrique.

## Patentansprüche

1. Vorrichtung zum Ausbringen von Partikeln, die in wenigstens einem Fülltrichter gelagert sind, der wenigstens eine Austrittsöffnung aufweist, die die Partikel in wenigstens eine Rinne (20) abgibt, deren Austrittsende über einer Streuscheibe (24) angeordnet ist, die die Partikel empfängt und verstreut, **dadurch gekennzeichnet, dass** die Wände (21, 22, 23) der Rinne so geformt sind, dass der Abschnitt des Austrittsendes eine Verlagerung des Schwerpunktes (B1, B2) des Abschnitts des Partikelflusses im Bereich der Austrittsöffnung in einer Richtung entgegen (51) der Richtung der Drehbewegung (28) der Streuscheibe verursacht, wenn die Menge an Partikeln (N1, N2) in der Rinne zunimmt.

2. Vorrichtung zum Ausbringen gemäß Anspruch 1, **dadurch gekennzeichnet, dass** das Austrittsende der Rinne (20) eine asymmetrische Form aufweist.

3. Vorrichtung zum Ausbringen gemäß Anspruch 2, **dadurch gekennzeichnet, dass** die Rinne einen Boden (21) und zwei Seitenwände (22, 23) aufweist, die nicht symmetrisch zu einer Ebene sind, die sich senkrecht zu dem Boden erstreckt.

4. Vorrichtung zum Ausbringen gemäß Anspruch 3, **dadurch gekennzeichnet, dass** eine erste Seitenwand (22) einen ersten Winkel, der kleiner ist als 90° mit dem Boden (21) bildet und daß die zweite Seitenwand (23) einen zweiten Winkel, der größer ist als 90° mit dem Boden (21) bildet.

5. Vorrichtung zum Ausbringen gemäß Anspruch 4, **dadurch gekennzeichnet, dass** der erste Winkel (α1) zwischen 50 und 75° beträgt.

6. Vorrichtung zum Ausbringen gemäß Anspruch 4 oder Anspruch 5, **dadurch gekennzeichnet, dass** der zweite Winkel (α2) zwischen 110 und 130° beträgt.

7. Vorrichtung zum Ausbringen gemäß einem der Ansprüche 4 bis 6, **dadurch gekennzeichnet, dass** die erste Seitenwand (22) die gemäß der Drehrichtung (28) der Streuscheibe später getroffene Wand ist.

8. Vorrichtung zum Ausbringen gemäß einem der Ansprüche 1 bis 7, **dadurch gekennzeichnet, dass** die Rinne (20) ausgehend von dem Austrittsende und über eine definierte Länge wenigstens einen Ausschnitt (321) in Längsrichtung aufweist, die das Durchlaufen einer Portion der Partikel vor Erreichen der Austrittsöffnung ermöglicht.

9. Vorrichtung zum Ausbringen gemäß einem der Ansprüche 1 bis 8, **dadurch gekennzeichnet, dass** der Boden (21) der Rinne im Wesentlichen eben ist.

10. Vorrichtung zum Ausbringen gemäß einem der Ansprüche 1 bis 8, **dadurch gekennzeichnet, dass** der Boden (41, 42) der Rinne eine nicht ebene und/oder nicht symmetrische Form aufweist.

## Claims

1. Spreading device for spreading particles which are stored in at least one sieve, having at least one output opening which supplies particles into at least one chute (20) whose output end is placed above a spreading disc (24) which receives and projects the particles,
**characterised in that** the walls (21, 22, 23) of the chute are formed so that the cross-section of the output end brings about a movement of the barycentre (B1, B2) of the cross-section of flow of particles in the region of the output end, in an opposite direction (51) to that of the rotation (28) of the spreading disc, when the quantity of particles (N1, N2) present in the chute increases.

2. Spreading device according to claim 1, **characterised in that** the output end of the chute (20) has an asymmetrical shape.

3. Spreading device according to claim 2, **characterised in that** the chute has a base wall (21) and two lateral walls (22, 23) which are non-symmetrical relative to a plane perpendicular relative to the base wall.

4. Spreading device according to claim 3, **characterised in that** a first lateral wall (22) forms a first angle of less than 90° with the base wall (21), and **in that** a second lateral wall (23) forms a second angle greater than 90° with the base wall (21).

5. Spreading device according to claim 4, **characterised in that** the first angle (α1) is between 50 and 75°.

6. Spreading device according to either claim 4 or claim 5, **characterised in that** the second angle (α2) is between 110 and 130°.

7. Spreading device according to any one of claims 4 to 6, **characterised in that** the first lateral wall (22) is the wall which is encountered last, in the rotation direction (28) of the spreading disc.

8. Spreading device according to any one of claims 1 to 7, **characterised in that** the chute (20) has at least one longitudinal cutout (321), from the output end and over a predefined length, which allows the passage of a portion of the particles before having reached the output end.

9. Spreading device according to any one of claims 1 to 8, **characterised in that** the base (21) of the chute is substantially planar.

10. Spreading device according to any one of claims 1 to 8, **characterised in that** the base (41, 42) of the chute has a non-planar and/or non-symmetrical shape.
